Europäisches Patentamt

European Patent Office

Office européen des brevets

(11) Veröffentlichungsnummer: **0 127 050**
A2

(12) **EUROPÄISCHE PATENTANMELDUNG**

(21) Anmeldenummer: **84105440.6**

(22) Anmeldetag: **14.05.84**

(51) Int. Cl.³: **A 47 J 43/046**

(30) Priorität: 28.05.83 DE 3319513
28.09.83 DE 3335139

(43) Veröffentlichungstag der Anmeldung:
05.12.84 Patentblatt 84/49

(84) Benannte Vertragsstaaten:
AT BE CH FR GB IT LI LU NL SE

(71) Anmelder: Geka-Werk Reinhold Klein KG
Postfach 3
D-3573 Gemünden/Wohra(DE)

(72) Erfinder: Rebel, Joachim
Siegenbergstrasse 128
D-7313 Reichenbach/Fils(DE)

(72) Erfinder: Lauer, Brunhilde
Ellersgrund 1
D-3573 Gemünden/Wohra(DE)

(74) Vertreter: Freiherr von Schorlemer, Reinfried et al,
Brüder-Grimm-Platz 4
D-3500 Kassel(DE)

(54) Küchenmaschine.

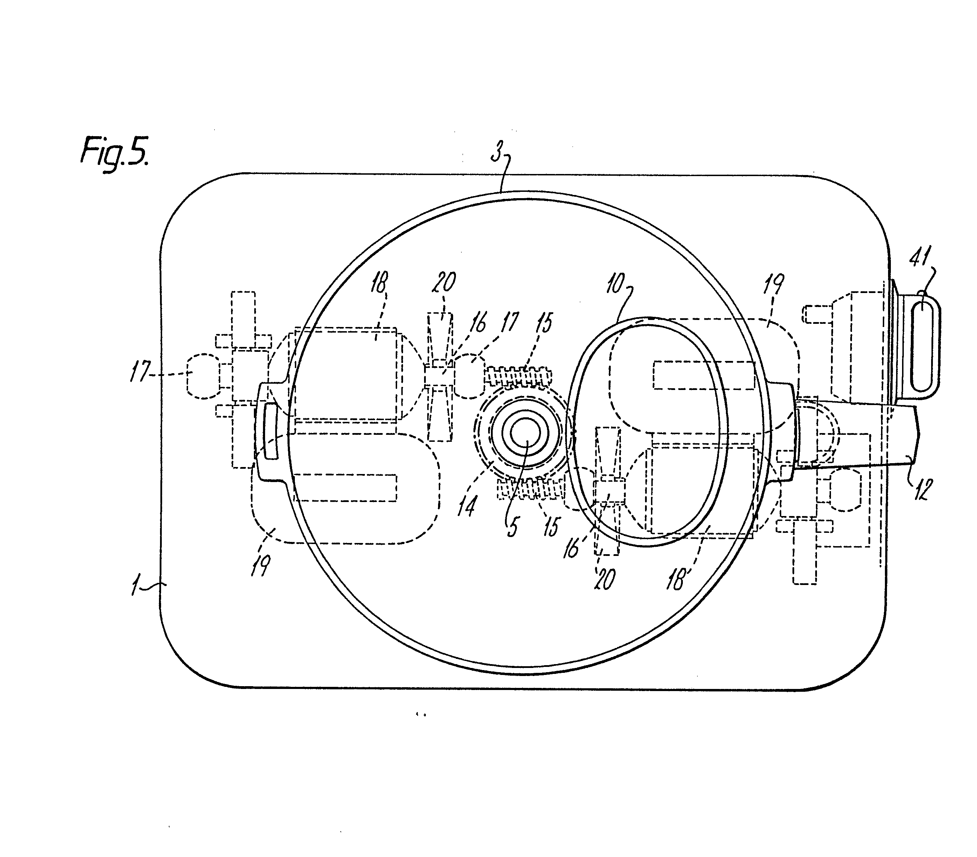

(57) Küchenmaschine, insbesondere Schneide-, Rühr-, Knet-
oder Mixmaschine mit einer Arbeitswelle (5), die erfindungsgemäß mit wenigstens zwei elektromotorisch angetriebenen Schneckengetrieben (14, 15) in Wirkverbindung
steht, die das geforderte Drehmoment gemeinschaftlich auf
die Arbeitswelle (5) übertragen (Figur 5).

Fig.5.

EP 0 127 050 A2

Croydon Printing Company Ltd.

Küchenmaschine

Die Erfindung betrifft eine Küchenmaschine, insbesondere Schneide-, Rühr-, Knet- oder Mixmaschine mit einer Arbeitswelle, die mit einem elektromotorisch angetriebenen Schnekkengetriebe in Wirkverbindung steht.

Bekannte Küchenmaschinen dieser Art besitzen einen Antriebsmotor, der die Arbeitswelle bei einer Leistungsaufnahme von z.B. 400 Watt mit einer Drehzahl von z.B. 1500 bis 3000 U.p.M. in Umdrehungen versetzt. Bei Vielzweck-Küchenmaschinen besteht die zusätzliche Forderung, daß die Arbeitswelle das größte im Einzelfall erforderliche Drehmoment liefert, das in Abhängigkeit vom Verwendungszweck, z.B. der Verarbeitung von Fleisch, der Aufbereitung von Teigwaren, der Zerkleinerung von Gemüse od. dgl., recht hoch sein kann.

Als Antriebsmotoren für derartige Küchenmaschinen werden bisher Einphasen-Kondensatormotoren oder Universalmotoren verwendet.

Einphasen-Kondensatormotoren haben den Vorteil der passenden Drehzahl. Sie benötigen kein Untersetzungsgetriebe und können direkt auf die Arbeitswelle einwirken. Motoren dieser Art besitzen jedoch ein bei Küchenmaschinen unerwünscht großes Gewicht, einen großen Raumbedarf und ein geringes Anlaufmoment, das Startschwierigkeiten zur Folge hat und nur durch Verwendung von überdimensionierten Motoren oder von Motoren mit komplexer Bauweise vermieden werden kann, was hohe Kosten verursacht.

Demgegenüber können Universalmotoren nur mit einem den Raumbedarf vergrößernden Untersetzungsgetriebe in Form eines Schnecken-, Riemen- oder Zahnradgetriebes betrieben werden, weil ihre Drehzahlen bei etwa 15000 bis 30000 U.p.M. liegen. Bei bekannten Küchenmaschinen ist daher der Universalmotor neben dem Arbeitsbehälter in einer besonderen Kammer untergebracht, was aus formalen Gründen unerwünscht ist. Abgesehen davon machen Universalmotoren den Einsatz aufwendiger Lagerelemente wie Kugellager erforderlich, weil durch das Untersetzungsgetriebe hohe einseitige Drücke sowohl auf die Motorals auch auf die Arbeitswelle und die mit diesen verbundenen Teile des Untersetzungsgetriebes ausgeübt werden. Bei der aus Platz- und Kostengründen bevorzugten Anwendung von Untersetzungsgetrieben in Form von aus Kunststoff gefertigten Schneckengetrieben kommt noch hinzu, daß die geforderten Drehmomente nur übertragen werden, wenn unerwünscht große Schneckenräder vorgesehen werden.

Der Erfindung liegt die Aufgabe zugrunde, die Küchenmaschine der eingangs bezeichneten Gattung mit einem Antrieb zu versehen, der eine platzsparende, gedrungene Bauform ermöglicht, auch bei Anwendung von kleinen Kunststoff-Schneckengetrieben vergleichsweise große Drehmomente überträgt und kostengünstig hergestellt werden kann.

Zur Lösung dieser Aufgabe ist die eingangs bezeichnete Küchenmaschine dadurch gekennzeichnet, daß die Arbeitswelle mit wenigstens einem weiteren elektromotorisch angetriebenen Schneckengetriebe in Wirkverbindung steht und alle vorhandenen Elektromotoren bzw. Schneckengetriebe gemeinschaftlich das geforderte Drehmoment auf die Arbeitswelle übertragen.

Die Erfindung bringt eine Vielzahl von Vorteilen mit sich. Besonders vorteilhaft ist, daß für das Schneckengetriebe preisgünstige Schnecken und Schneckenräder verwendet werden können. Der Modul dieser Bauteile kann nämlich erheblich kleiner sein, als dem geforderten Gesamtdrehmoment entspricht. Weiterhin können Universalmotoren in Flachbauweise, d.h. Motoren mit kurzer und flacher Bauform vorgesehen werden, die in einem unterhalb des Arbeitsgefäßes angeordneten Gehäuseteil angeordnet werden können, da jeder vorhandene Motor nur einen Bruchteil der geforderten Leistung aufbringen muß.

Die Erfindung wird nachfolgend in Verbindung mit der beiliegenden Zeichnung an einem Ausführungsbeispiel näher erläutert. Es zeigen:

Fig. 1 eine Vorderansicht des Motorgehäuses der erfindungsgemäßen Küchenmaschine;

Fig. 2 bis 4 teilweise vergrößerte Vertikalschnitte durch die Küchenmaschine nach Fig. 1 bei aufgesetztem Arbeitsgefäß und Deckel;

Fig. 5 eine Draufsicht auf die Küchenmaschine nach Fig. 3 in vergrößertem Maßstab;

Fig. 6 und 7 schematische Seitenansichten von Bajonettverschlüssen zum Verriegeln des Deckels auf dem Arbeitsgefäß bzw. dem Arbeitsgefäß auf dem Motorgehäuse in vergrößertem Maßstab;

Fig. 8 und 9 Schnitte längs der Linien VIII-VIII bzw. IX-IX der Fig. 6 und 7 in vergrößertem Maßstab; und

Fig. 10 schematisch einen Horizontalabschnitt durch eine weitere Ausführungsform der erfindungsgemäßen Küchenmaschine etwa in Höhe der Schneckenachsen.

Die Zeichnung zeigt eine Küchenmaschine für die Zubereitung von Nahrungsmitteln in Form eines sogenannten "Food Processors", der zum Schneiden, Kneten, Rühren, Raspeln, Zerhacken, Mixen od. dgl. verschiedener Lebensmittel geeignet ist und daher auch als Universalküchenmaschine bezeichnet werden könnte. Die Küchenmaschine besitzt ein Motorgehäuse 1, auf dessen verjüngtes Oberteil 2 ein Arbeitsgefäß 3 aufsetzbar ist. Das Oberteil 2 weist in einem mittleren Abschnitt eine Öffnung auf, über welcher ein zylindrischer, vom Boden des Arbeitsgefäßes 0127050
dessen Innenraum ragender zylindrischer Ansatz 4 zu liegen
kommt. Im Motorgehäuse 1 ist eine Arbeitswelle 5 drehbar gelagert, die die Öffnung des Oberteils 2 und den Ansatz 4
durchragt und dessen aus dem Ansatz 4 herausragendes Ende
als Aufnahme 6 für ein Kupplungselement 7 eines Arbeitswerkzeugs 8 der Küchenmaschine ausgebildet ist. Auf das Oberteil
des Arbeitsgefäßes 3 ist ein Deckel 9 mit einem Einfülltrichter 10 aufsetzbar, der mittels eines Stopfers 11 verschließbar ist. An einem seitlichen Teil des Arbeitsgefäßes 3 ist
ein Handgriff 12 befestigt.

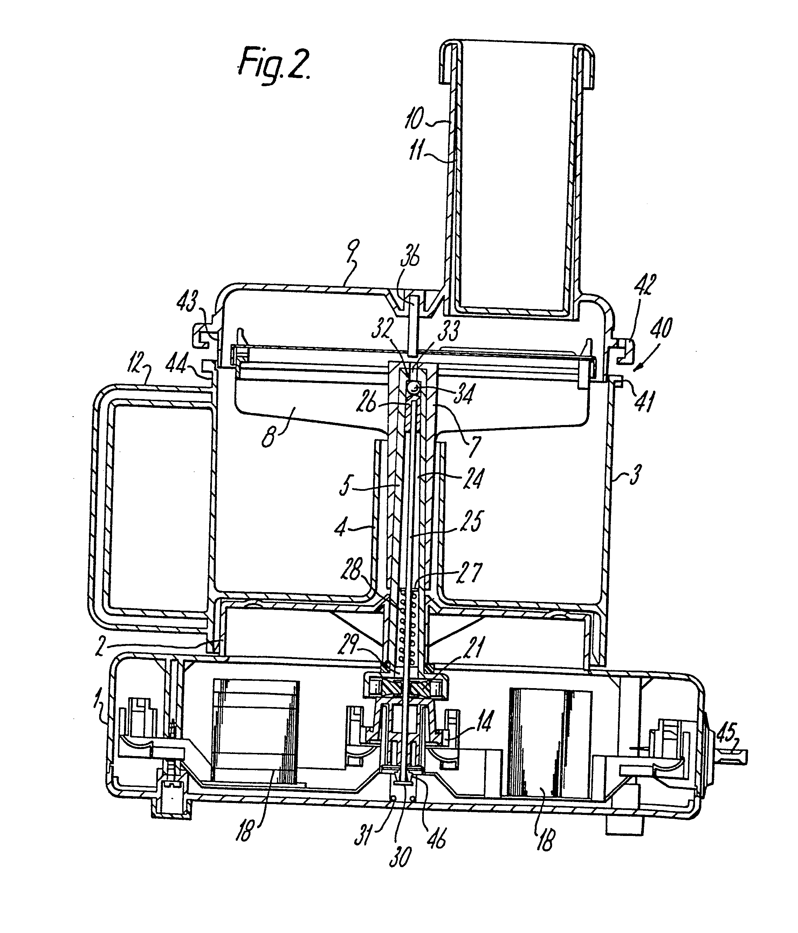

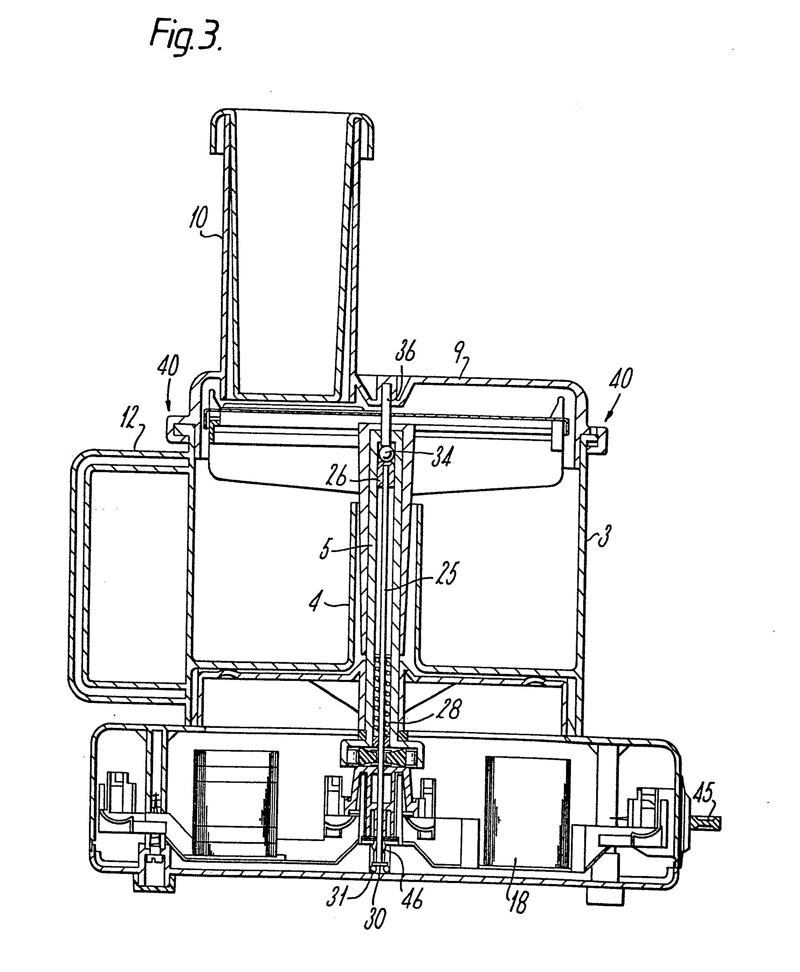

Auf dem unteren Ende der Arbeitswelle 5 ist nach Fig. 2 bis 5 ein
Schneckenrad 14 befestigt, das aus Kostengründen vorzugsweise
als schräg verzahntes Stirnrad ausgebildet und aus Kunststoff
hergestellt ist. Mit diesem Schneckenrad 14 stehen nach Fig.
5 zwei Schnecken 15 im Eingriff, die am einen Ende je einer
Motorwelle 16 ausgebildet sind. Die Motorwellen 16 sind in
Lagerelementen 17 drehbar gelagert, die an einem nicht näher
dargestellten Rahmen des Motorgehäuses 1 befestigt sind. Zwischen den Lagerelementen 17 sind auf den Motorwellen 16 jeweils die drehbaren Teile je eines Elektromotors 18 mit einem
Spulenpaket 19 befestigt. Diese Elektromotoren sind nur schematisch angedeutet und bestehen vorzugsweise aus Universalmotoren, die in Kompaktbauweise hergestellt sind und daher eine
geringe Bauhöhe und Baulänge besitzen. Auf den Motorwellen 16
sitzt außerdem je ein Lüfterrad 20.

Gemäß Fig. 5 bilden die beiden Schnecken 15 und das von beiden Schnecken gemeinsam angetriebene Schneckenrad 14 je ein
Schneckengetriebe, das einerseits mit der Arbeitswelle 5 in
Wirkverbindung steht, andererseits von den beiden Elektromotoren 18 angetrieben ist. Die Achsen beider Schnecken 15 sind
in derselben Ebene und parallel zueinander angeordnet, so daß
sie an nahezu diametral gegenüberliegenden Seiten der Arbeitswellenachse in das Schneckenrad 14 eingreifen. Aufgrund dieser
symmetrischen Anordnung zur Arbeitswelle 5 werden die beim Antrieb auf diese ausgeübten Achsdrücke nahezu gegeneinander
aufgehoben bzw. neutralisiert, so daß die Arbeitswelle 5
nicht mit kostspieligen Lagerelementen in Form von Kugellagern od. dgl. im Motorgehäuse abgestützt werden braucht.

Da erfindungsgemäß zwei Schneckengetriebe 14,15 und zwei
Elektromotoren 18 vorgesehen sind, wird das für die Arbeitswelle 5 geforderte Drehmoment jeweils von zwei Einheiten
übertragen, die bei aus konstruktiven Gründen bevorzugter
identischer Ausbildung nur jeweils die Hälfte des geforderten Drehmoments übertragen brauchen. Entsprechendes gilt
hinsichtlich der geforderten Gesamtnennleistung, die von
zwei Elektromotoren/mit je halber Nennleistung aufgebracht
z.B. Universalmotoren,
wird. Hierdurch ist es einerseits möglich, ein Schneckenrad 14 mit verhältnismäßig kleinem Modul vorzusehen, da
die Zähne des Schneckenrads an zwei gegenüberliegenden
Seiten sowohl beim normalen Antrieb als auch im Falle
einer Blockierung der Arbeitswelle jeweils nur halb so
stark belastet werden, als es bei Anwendung eines einzigen
Schneckengetriebes der Fall wäre. Andererseits hat die erfindungsgemäße Bauform des Antriebs zur Folge, daß jeder
einzelne Elektromotor 18 aufgrund der halbierten Leistung
wesentlich kleiner und insbesondere flacher ausgebildet
werden kann. Dadurch ist es möglich, die Höhe des Antriebsgehäuses 3 wesentlich kleiner als bei Anwendung nur eines
einzigen Elektromotors zu halten, wodurch gleichzeitig der
Schwerpunkt der gesamten Küchenmaschine vergleichsweise
tief zu liegen kommt, eine hohe Standsicherheit erzielt
wird und eine große Betriebssicherheit gewährleistet ist.
Abgesehen davon ist es möglich, das Motorgehäuse 1 so klein
auszubilden, daß sein Außenquerschnitt praktisch dem Außenquerschnitt des Arbeitsgefäßes 3 entspricht, was aus formalen
Gründen erwünscht ist.

Das Schneckenrad 14 steht vorzugsweise über eine Drehmoment-
Kupplung 21, die in Fig. 2 bis 4 nur schematisch angedeutet
ist, mit der Arbeitswelle 5 in Wirkverbindung. Hierbei kann
es sich beispielsweise um eine Reibungskupplung mit Kupplungsscheiben handeln, deren Anpreßdruck eingestellt werden kann.
Zu diesem Zweck ist das Schneckenrad 14 beispielsweise drehbar auf einer verjüngten Verlängerung der Arbeitswelle 5 und
beidseitig zwischen zwei Stahlscheiben gelagert. Die obere
Stahlscheibe stützt sich dabei an einer Schulter der Arbeitswelle 5 ab, während die andere Stahlscheibe unter dem Druck

0127050

einer Tellerfeder steht, deren Anpreßdruck mit Hilfe von zwei Kontermuttern eingestellt werden kann. Auf diese Weise läßt sich das maximal übertragbare Drehmoment begrenzen und sicherstellen, daß das Schneckenrad 14 auch bei extremen Belastungen, z.B. beim Blockieren der Arbeitswelle 5, nicht überlastet wird, da hierzu nur der Anpreßdruck der Tellerfeder auf einen unterhalb der Belastungsgrenze des Schneckenrades liegenden Wert eingestellt werden braucht.

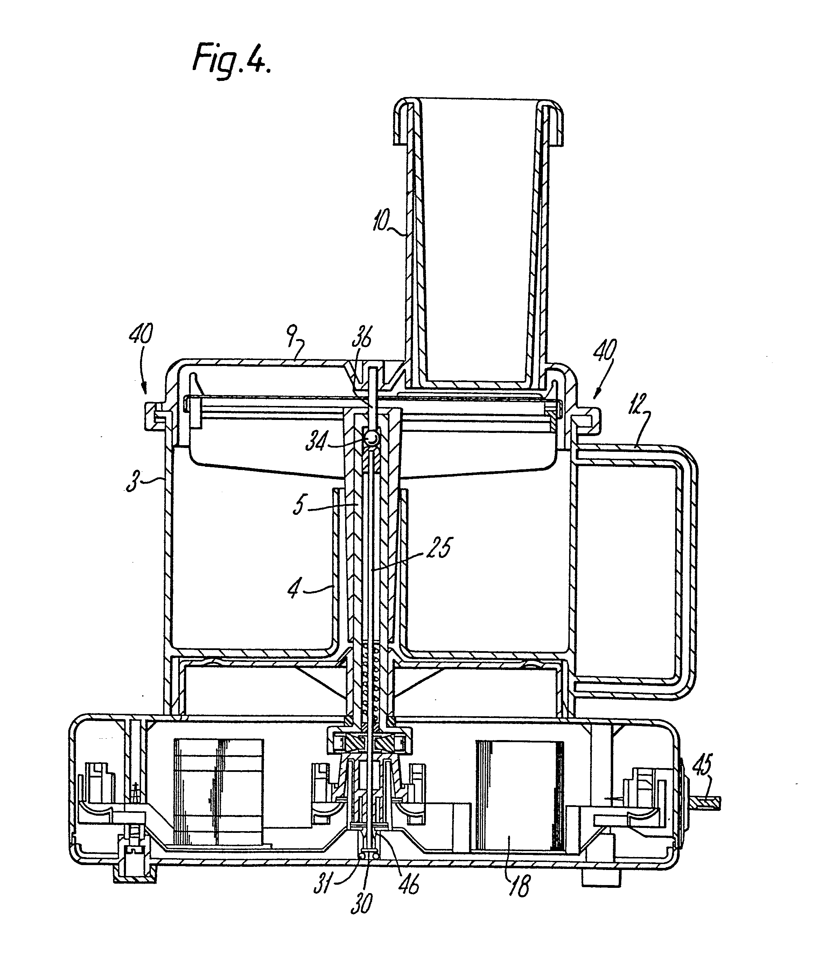

Gemäß Fig. 2 bis 4 ist die Arbeitswelle 5 als Hohlwelle ausgebildet und mit einem zylindrischen Hohlraum 24 versehen. In diesem Hohlraum 24 ist ein zylindrischer Stößel 25 gelagert, auf dessen oberes Ende eine zylindrische Führungsbuchse 26 aufgezogen ist, die sich am Mantel der Hohlwelle abstützt. In einem mittleren Teil ist ein Anschlag 27 in Form einer Unterlegscheibe auf dem Stößel 25 befestigt, an der sich das eine Ende einer den Stößel umgebenden Schraubenfeder 28 abstützt, deren anderes Ende einem Anschlag 29 in Form einer Haltebuchse anliegt, die in das in Fig. 2 bis 4 untere Ende der Hohlwelle mit Preßsitz eingesetzt und vom Stößel 25 durchragt ist. An dem in Fig. 2 bis 4 unteren, die Drehmomentkupplung 21 und das Schneckenrad 14 durchragenden Ende des Stößels 25 ist der bewegliche Kontakt 30 eines Sicherheitsschalters 31 befestigt, der in der aus Fig. 3 und 4 ersichtlichen Stellung des Stößels 25 geschlossen, in der aus Fig. 2 ersichtlichen Stellung des Stößels 25 dagegen geöffnet ist.

An ihrem in Fig. 2 bis 4 oberen Ende weist die Arbeitswelle 5 einen radial nach innen ragenden Kragen 32 auf, der eine im Bedarfsfall mit einer Einführungsschräge versehene Eintrittsöffnung 33 umgibt. Zwischen diesem Kragen und der Führungsbuchse 26 ist lose eine Kugel 34 eingelegt. Diese wird in der aus Fig. 2 ersichtlichen Offenstellung des Sicherheitsschalters 31 unter dem Einfluß der als Druckfeder ausgebildeten Schraubenfeder 27 durch die Führungsbuchse 26 des Stößels 25 dicht gegen den Kragen 32 gelegt und dichtet daher den Hohlraum 24 hermetisch ab. Dabei kann die Anordnung so getroffen sein, daß die Kugel 34 bündig mit dem oberen Ende der Arbeitswelle 5 abschließt oder sogar dieses noch teilweise überragt, um das Eindringen von Schmutz und Flüssigkeiten in den Hohlraum 24 gänzlich zu vermeiden.

Zur Betätigung des Sicherheitsschalters 31 dient ein Betätigungsorgan in Form eines Schaltstifts 36, der an der Unterseite des Deckels 9 befestigt ist und entsprechend Fig. 2 bis 4 senkrecht von diesem absteht. Der Schaltstift 36 wird beim Aufsetzen des Deckels 9 auf das Arbeitsgefäß 3 mit seinem freien Ende aus der Stellung nach Fig. 2 in die Eintrittsöffnung 33 eingeführt, so daß er in seiner aus Fig. 3 und 4 ersichtlichen Stellung die Kugel 34 und damit den Stößel 25 gegen den Druck der Schraubenfeder 28 nach unten drückt und dadurch den Sicherheitsschalter 31 schließt. Beim Abheben des Deckels 9 wird der Schaltstift 36 dagegen aus der Eintrittsöffnung 33 herausgezogen, wodurch der Stößel 25 unter dem Einfluß der Schraubenfeder 28 nach oben gedrückt wird, bis sich die Kugel 34 wieder an den Kragen 32 anlegt und sich der Sicherheitsschalter 31 aus eigener Federkraft automatisch öffnet. Das Kupplungselement 7 und das Arbeitswerkzeug 8 sind mit zentralen, den Durchgang des Schaltstifts 36 ermöglichenden Öffnungen versehen.

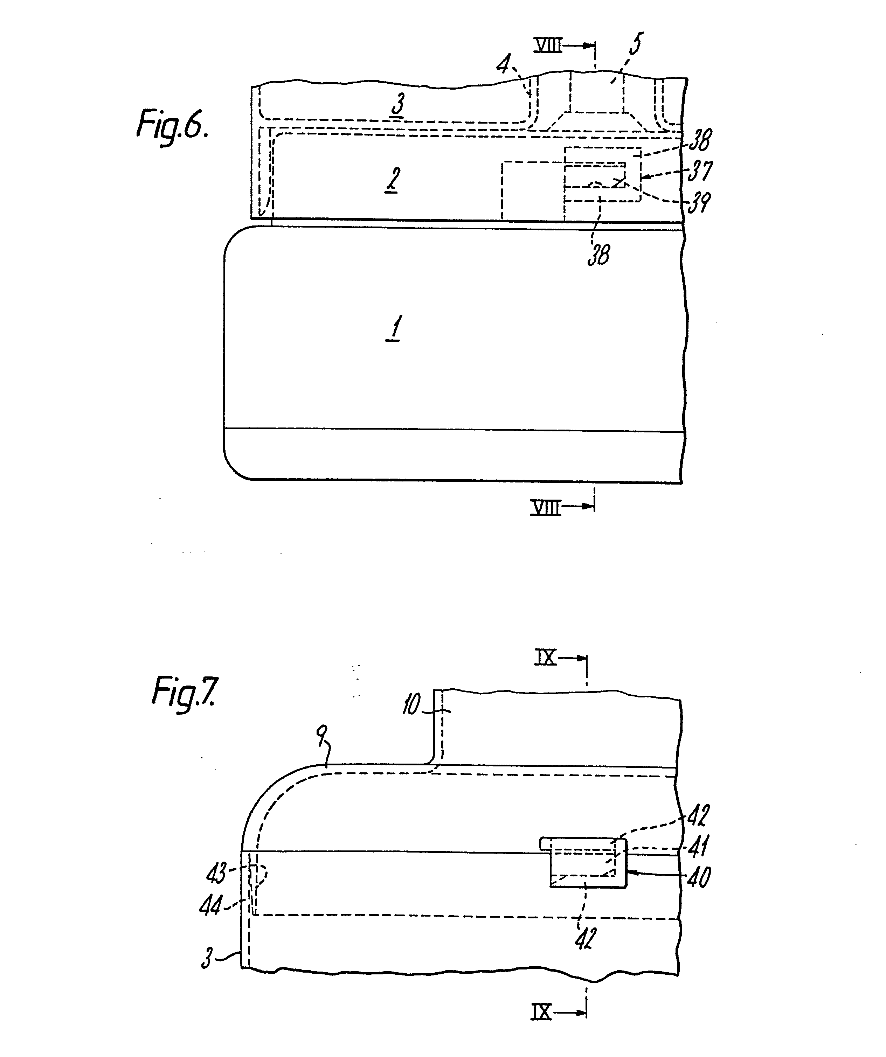

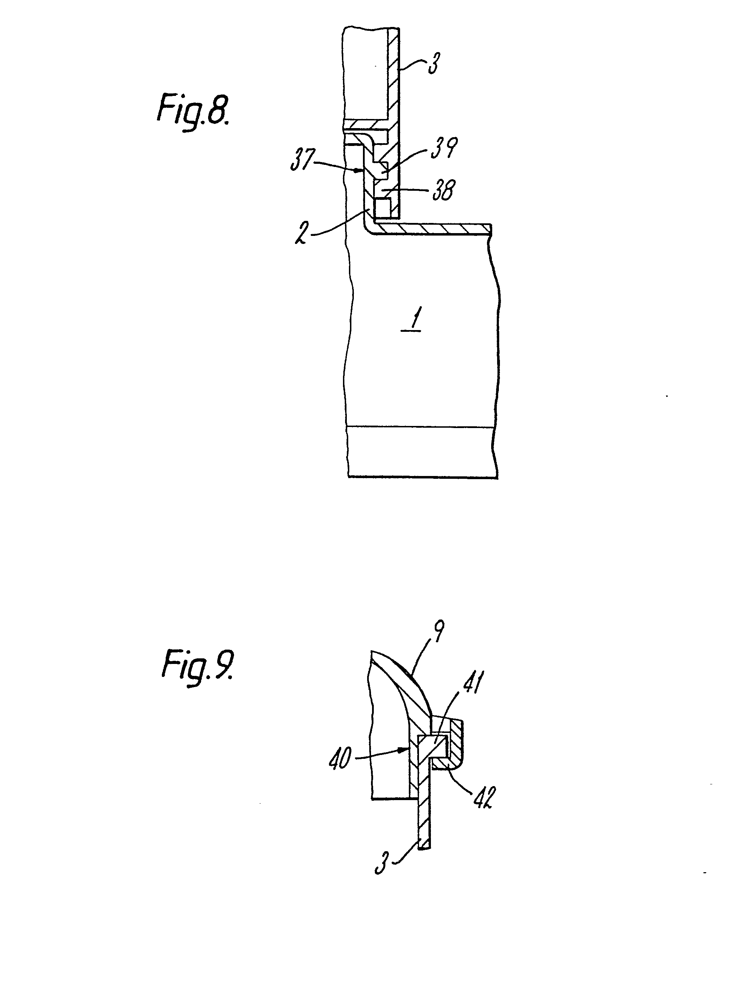

Das Arbeitsgefäß 3 ist nicht nur auf das Motorgehäuse 1 aufsetzbar, sondern auch auf diesem verriegelbar. Hierzu dienen gemäß Fig. 6 bis 9 vorzugsweise Bajonettverschlüsse 37, die aus korrespondierenden, am unteren Rand des Arbeitsgefäßes 3 und am Oberteil 2 angebrachten Verschlußelementen 38,39 bestehen, die das Arbeitsgefäß 3 nach seinem Aufsetzen und Verdrehen auf dem Motorgehäuse 1 gegen axiales Abnehmen arretieren. Entsprechend sind am oberen Rand des Arbeitsgefäßes und an einem nach unten gezogenen Rand des Deckels 9 korrespondierende, Bajonettverschlüsse 40 bildende Verschlußelemente 41,42 angebracht, die den Deckel 9 nach seinem Aufsetzen und Verdrehen auf dem Arbeitsgefäß 3 axial arretieren. Dabei sind das Arbeitsgefäß 3, der Deckel 9 und die Bajonettverschlüsse 37,40 derart drehsymmetrisch zur Arbeitswelle 5 ausgebildet und angeordnet, daß einerseits das Arbeitsgefäß 3 entweder die aus Fig. 2 ersichtliche Lage oder eine nach Verdrehen um die Achse der Arbeitswelle 5 um 180° erreichte Lage nach Fig. 4 auf dem Motorgehäuse 1 einnimmt und in diesen beiden Lagen verriegelt werden kann und andererseits der Deckel 9 entweder die aus Fig. 2 ersichtliche Lage oder eine nach Verdrehen um die Achse der Arbeitswelle 5 um 180° erreichte Lage nach Fig. 3
auf dem Arbeitsgefäß einnimmt und in diesen beiden Lagen
verriegelt werden kann. Dadurch kann der Benutzer der Küchenmaschine frei entscheiden, auf welcher Seite der Handgriff 12 und/oder der Einfülltrichter 10 angeordnet sein soll,
wodurch der Bedienungskomfort der Küchenmaschine beträchtlich
erhöht wird.

Die Länge des Schaltstifts 36, die Länge des nach unten gezogenen Randes des Deckels 9 und die Lage und Ausbildung der
Bajonettverschlüsse 40 sind vorzugsweise so gewählt, daß
beim Aufsetzen des Deckels 9 auf das Arbeitsgefäß 3 entsprechend Fig. 2 zunächst ein unterer Randabschnitt 43 des Dekkels 9 in einen oberen Randabschnitt 44 des Arbeitsgefäßes
3 von entsprechendem Querschnitt zu liegen kommt, bevor beim
weiteren Absenken des Deckels 9 auch der Schaltstift 36 in
die Eintrittsöffnung 33 eintritt. Dadurch wird der Vorteil
erzielt, daß der Deckel 9 beim Einführen des Schaltstifts
36 in die Eintrittsöffnung 33 bereits durch die Randabschnitte 43,44 zentriert ist. Außerdem ergibt sich der Vorteil, daß die korrespondierenden Randabschnitte 43 und 44
in der Schließstellung des Deckels 9 eine derartige Zentrierung bewirken, daß der Schaltstift 36 nicht nur als Betätigungsorgan für den Sicherheitsschalter 31, sondern gleichzeitig auch als obere Lagerstelle für die Arbeitswelle 25 dient
und diese abstützt und zentriert, so daß diese im oberen Bereich des Arbeitsgefäßes 3 nicht zusätzlich gelagert werden
braucht.

Im übrigen ist die Länge des Schaltstifts 36 so bemessen,
daß der Sicherheitsschalter 31 erst geschlossen wird, wenn
der Deckel 9 auf dem Arbeitsgefäß 3 aufliegt. Damit soll erreicht werden, daß der Sicherheitsschalter 31 nicht schon
beim Aufsetzen des Deckels 9, sondern erst nach dessen Verdrehung und damit Verriegelung durch die Bajonettverschlüsse
40 geschlossen wird.

Der Sicherheitsschalter 31 ist in an sich bekannter Weise
(DE-PS 21 41 813, DE-AS 28 17 044, DE-OS'en 30 07 915,
31 21 252 und 32 06 493) in einen Stromkreis geschaltet, der
die zu den Elektromotoren 18 führenden Leitungen, das zum
Netz führende Stromkabel und einen an der Vorderseite des
Motorgehäuses 1 angebrachten Betätigungsschalter 45 enthält.
Der Betätigungsschalter 45 kann aus seiner dargestellten Aus-
Stellung heraus nach oben in eine Ein-Stellung und nach unten
in eine Tast-Stellung bewegt werden, in welcher die Elektromotoren entweder schrittweise angetrieben oder nach Loslassen
des Betätigungsschalters wieder angehalten werden. Dabei ist
der Sicherheitsschalter 31 so in diesen Stromkreis geschaltet,
daß die Elektromotoren 18 nur bei der geschlossenen Stellung
nach Fig. 3 und 4 eingeschaltet werden können, bei der aus
Fig. 2 ersichtlichen Offenstellung des Sicherheitsschalters
dagegen in jeder Stellung des Betätigungsschalters 45 ausgeschaltet bleiben.

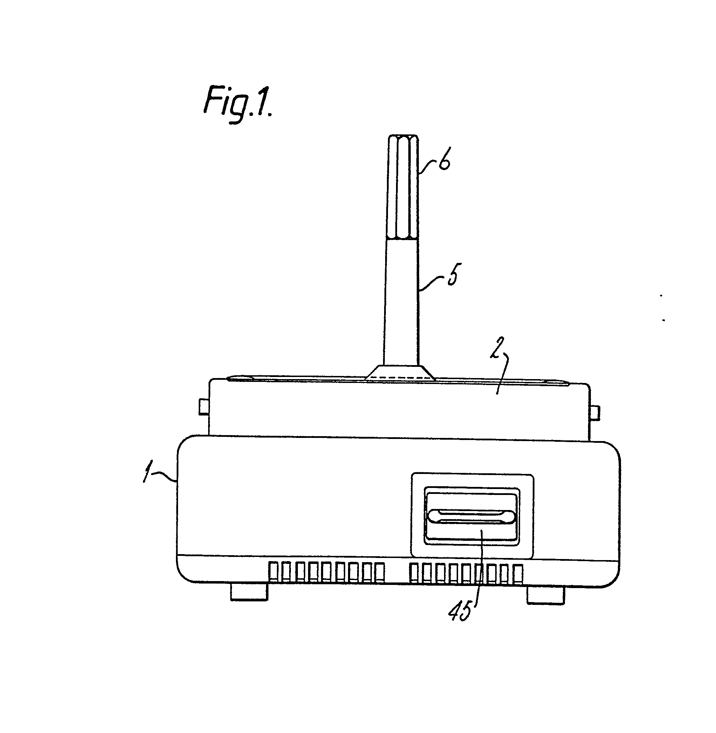

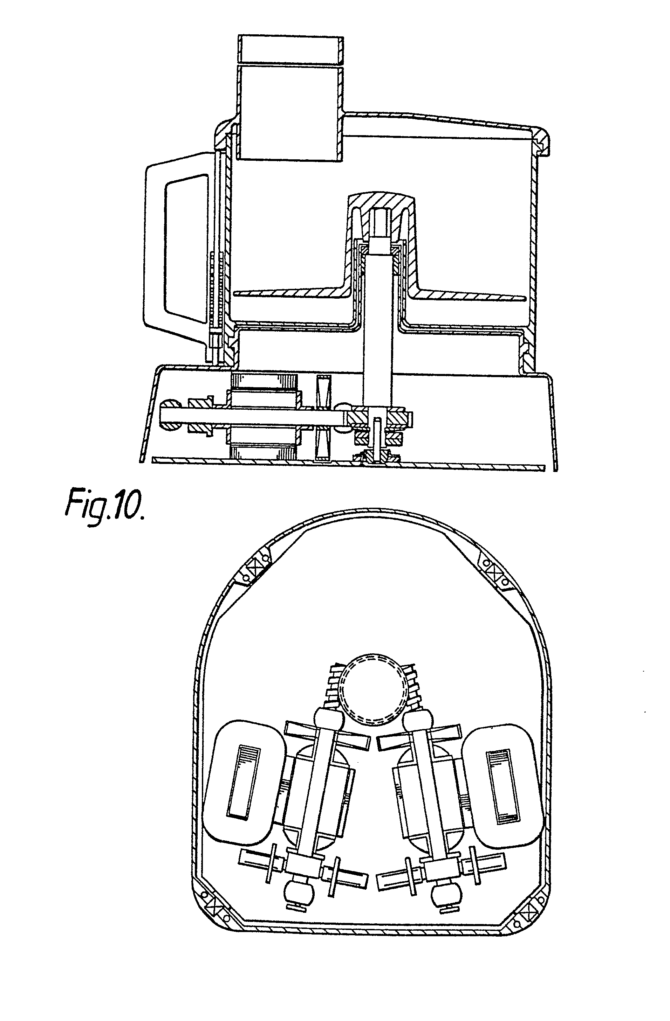

Die Ausführungsform nach Fig. 10 unterscheidet sich von
der Ausführungsform nach Fig. 1 bis 9 dadurch, daß die
Achsen der Schnecken 15 nicht parallel, sondern V-förmig
auf beiden Seiten der Achse der Arbeitswelle 5 angeordnet
sind, die das mit den beiden Schnecken 15 im Eingriff befindliche Schneckenrad 14 trägt. Im übrigen werden beide Schnekken 15 von je einem der Elektromotoren 18 angetrieben, so daß
sich dieselben Vorteile wie bei der Ausführungsform nach
Fig. 1 bis 9 ergeben.

Die Erfindung ist nicht auf die beschriebenen Ausführungsformen beschränkt, die sich in mannigfacher Weise
abwandeln lassen. Bei der Küchenmaschine kann es sich beispielsweise um einen Fleischwolf, eine Brotschneidemaschine
od. dgl. handeln, und anstelle von zwei Schnecken könnten
mehr als zwei Schnecken vorgesehen sein, die beispielsweise
an den Spitzen eines gedachten gleichseitigen Dreiecks oder
Quadrats angeordnet sind, dessen Mittelpunkt von der Antriebswellenachse durchragt ist. Weiterhin wäre es möglich, auf
der Arbeitswelle 5      jeweils so viele Schneckenräder
übereinander vorzusehen, wie Schnecken 15  vorhanden
sind, und jedes Schneckenrad je einer Schnecke zuzuordnen.
In diesem Falle würde daher jedes Schneckengetriebe aus je
einer Schnecke und je einem gesonderten Schneckenrad gebildet. Möglich wäre es auch, ein allen Schneckengetrieben
gemeinsames, jedoch vergleichsweise hohes Schneckenrad vorzusehen und jede Schnecke in einer unterschiedlichen Ebene
des Schneckenrads mit diesem in Eingriff zu bringen. Weiterhin kann ein weiterer Sicherheitsschalter vorgesehen werden,
der in an sich bekannter Weise beim Aufsetzen des Arbeitsgefäßes 3
auf das Motorgehäuse geschlossen wird. Weiterhin könnte der Sicherheitsschalter 31 so in den Stromkreis eingeschaltet werden, daß
nur in seiner Offenstellung das Einschalten der Elektromotoren möglich ist. In diesem Fall würde der Kontakt 31 in der
aus Fig. 2 ersichtlichen Stellung des Stößels 25 beispielsweise an festen Kontakten 46 des Sicherheitsschalters anliegen und sich beim Übergang in die aus Fig. 4 ersichtliche
Stellung von diesen lösen. Weiterhin kann der Sicherheitsschalter abweichend von der Zeichnung aus einem Tastschalter
bestehen, auf den sich das untere Ende des Stößels 25 beim
Schließen des Deckels 9 auflegt. Vorzugsweise wird für den
Sicherheitsschalter ein handelsüblicher Mikroschalter verwendet. Schließlich können die Bajonettverschlüsse 37,40 so
ausgebildet sein, daß das Arbeitsgefäß und der Deckel auch
mehr als zwei bestimmte Lagen einnehmen können.

Patentanwalt **0127050**
Diplom-Physiker
**Reinfried Frhr. v. Schorlemer**

D-3500 Kassel
Brüder-Grimm-Platz 4
Telefon (0561) 1 53 35

Geka-Werk Reinhold Klein KG, 3573 Gemünden/Wohra

Ansprüche

1) Küchenmaschine, insbesondere Schneide-, Rühr, Knet- oder Mixmaschine, mit einer Arbeitswelle, die mit einem elektromotorisch angetriebenen Schneckengetriebe in Wirkverbindung steht, dadurch gekennzeichnet, daß die Arbeitswelle (5) mit wenigstens einem weiteren elektromotorisch angetriebenen Schneckengetriebe (14,15) in Wirkverbindung steht und alle vorhandenen Elektromotoren (18) bzw. Schneckengetriebe (14,15) gemeinschaftlich das geforderte Drehmoment auf die Arbeitswelle übertragen.

2) Küchenmaschine nach Anspruch 1, dadurch gekennzeichnet, daß die Schneckengetriebe je eine Schnecke (15) und ein allen Schneckengetrieben gemeinsames Schneckenrad (14) aufweisen.

3) Küchenmaschine nach Anspruch 1 oder 2, dadurch gekennzeichnet, daß die Schneckenräder (14) aus schrägverzahnten Stirnrädern bestehen.

4) Küchenmaschine nach wenigstens einem der Ansprüche 1 bis 3, dadurch gekennzeichnet, daß die Schneckenräder (14) aus Kunststoff bestehen.

0127050

5) Küchenmaschine nach wenigstens einem der Ansprüche 1 bis 4, dadurch gekennzeichnet, daß die Schnecken (15) symmetrisch zur Arbeitswelle angeordnet sind.

6) Küchenmaschine nach wenigstens einem der Ansprüche 1 bis 4, dadurch gekennzeichnet, daß die Achsen der Schnekken (15) in V-Form angeordnet sind.

7) Küchenmaschine nach wenigstens einem der Ansprüche 1 bis 6, dadurch gekennzeichnet, daß die Schneckenräder (14) über wenigstens eine Drehmomentkupplung (21) mit der Antriebswelle (5) verbunden sind.

8) Küchenmaschine nach wenigstens einem der Ansprüche 1 bis 7, gekennzeichnet durch ein Motorgehäuse (1), ein auf das Motorgehäuse aufsetzbares Arbeitsgefäß (3), durch dessen Boden die Arbeitswelle in das Motorgehäuse (1) ragt, einen auf das Arbeitsgefäß aufsetzbaren und auf diesem verriegelbaren Deckel (9) und durch einen im Motorgehäuse angeordneten Sicherheitsschalter (45), der beim Aufsetzen des Deckels auf das Arbeitsgefäß über einen von einem Betätigungsorgan des Deckels beaufschlagten Stößel (25) geschaltet wird, wobei die Arbeitswelle (5) eine den Stößel (25) teilweise aufnehmende Hohlwelle ist und das Betätigungsorgan ein an der Deckelunterseite angebrachter, in die Hohlwelle einführbarer Schaltstift (36) ist.

9) Küchenmaschine nach Anspruch 8, dadurch gekennzeichnet, daß das Arbeitsgefäß (3) drehsymmetrisch zur Arbeitswelle (5) ausgebildet und angeordnet und in wenigstens zwei Stellungen auf dem Motorgehäuse (1) verriegelbar ist.

10) Küchenmaschine nach Anspruch 8 oder 9, dadurch gekennzeichnet, daß der Deckel (9) drehsymmetrisch zur Arbeitswelle ausgebildet und angeordnet und in wenigstens zwei Stellungen auf dem Arbeitsgefäß verriegelbar ist.

11) Küchenmaschine nach wenigstens einem der Ansprüche 8 bis 10, dadurch gekennzeichnet, daß der Stößel (25) unter dem Einfluß einer Feder (28) steht.

12) Küchenmaschine nach wenigstens einem der Ansprüche 8 bis 11, dadurch gekennzeichnet, daß am freien Ende der Arbeitswelle (25) eine ihre Eintrittsöffnung (33) für den Schaltstift (36) abdichtende Kugel (34) gelagert ist.

**Fig.1.**

Fig.2.

2/8

0127050

**Fig. 3.**

Fig.4.

0127050

Fig.5.

Fig.6.

Fig.7.

0127050

Fig.8.

Fig.9.

0127050

Fig.10.